Europäisches Patentamt

European Patent Office

Office européen des brevets

(19)

(11) **EP 1 420 546 A1**

(12) **EUROPÄISCHE PATENTANMELDUNG**

(43) Veröffentlichungstag:
**19.05.2004 Patentblatt 2004/21**

(51) Int Cl.⁷: **H04L 12/26**

(21) Anmeldenummer: **02025497.5**

(22) Anmeldetag: **15.11.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(71) Anmelder: **Tektronix International Sales GmbH 8201 Schaffhausen (CH)**

(72) Erfinder: **Zander, Christian 13589 Berlin (DE)**

(74) Vertreter: **Schurack, Eduard F. et al Hofstetter, Schurack & Skora Balanstrasse 57 81541 München (DE)**

(54) **Verfahren zum Erstellen eines Ablaufs einer zwischen mindestens zwei Instanzen ablaufenden Kommunikation und Protokolltester**

(57)     Die vorliegen Erfindung betrifft ein Verfahren zum Erstellen eines Ablaufs einer zwischen mindestens zwei Instanzen ablaufenden Kommunikation, wobei eine Instanz ein Protokolltester ist, wobei ein Benutzer zur Erweiterung der Menge der auswählbaren Funktionalitäten zumindest eine Konfigurationsdatei an legt, die zum Zeitpunkt der Erstellung des Kommunikationsablaufs zwischen den mindestens zwei Instanzen eingelesen und interpretiert wird und aus der zur Compilezeit des Verfahrens ein zugehöriger Code erzeugt wird. Mit zumindest folgender Angaben in die Konfigurationsdatei: Aufrufname der Funktionalität im ablauffähigen Code des Verfahrens; mit der Funktionalität korrelierte Anzeigeform auf einer Anzeige; Angaben zur Beschreibungsdatei, die den ablauffähigen Quellcode der Funktionalität enthält. Sie betrifft überdies einen Protokolltester zur Durchführung dieses Verfahrens.

**Beschreibung**

Die vorliegende Erfindung betrifft ein Verfahren nach dem Oberbegriff von Patentanspruch 1 sowie einen Protokolltester nach dem Oberbegriff von Patentanspruch 17. Ein derartiges Verfahren und ein derartiger Protokolltester sind bekannt aus der EP 1 128 600, deren Offenbarungsgehalt durch diese Bezugnahme in die vorliegende Anmeldung mit aufgenommen wird. Dieses Dokument erläutert am Beispiel der standardisierten Sprache MSC (Message Sequence Charts), die dazu dient, einen Kommunikationsabläuf zwischen zwei Instanzen graphisch darzustellen, die Umsetzung der graphischen Darstellung in eine ausführbare Version eines Kommunikationsablaufs. Details zu MSC können der ITU-T Z.120 entnommen werden, die durch diese Bezugnahme ebenfalls in den Offenbarungsgehalt der vorliegenden Anmeldung aufgenommen wird. Damit lassen sich Kommunikationsabläufe selbst von nicht programmierkundigen Benutzern auf eine einfache Weise kreieren. Die in der EP 1 128 600 beschriebene Erfindung stellt zwar einen großen Fortschritt dar, dennoch verbleiben Probleme: Einer von der Anmelderin vertriebener Protokolltester unter der Bezeichnung K1297-G20, in dem die in der EP 1 128 600 beschriebene Erfindung realisiert ist, verfügt über ein weiteres Funktionselement, welches dem Anwender einfache Operationen zur Verfügung stellt. Dieses Element, der sogenannte MSC-Desktop Calculator, ermöglicht die Manipulation einfacher Datentypen, beispielsweise Integer und String. Aus diesen Operationen wird ein ausführbarer Code erzeugt.

Das Problem besteht nun darin, dass eine Erweiterung dieser Funktionalität um weitere Operationen nur durch ein neuerliches Kompilieren und Linken der beteiligten DLLs (Dynamic Link Libraries) erreicht werden kann. Dadurch können Erweiterungen zur Bereitstellung zusätzlicher Operationen nur herstellerseitig vorgenommen werden. Endbenutzer eines erfindungsgemäßen Protokolltesters können keine eigenen Operationen definieren oder vorhandene Operationen verfeinern. Zur Realisierung einer weiteren Operation blieb im Stand der Technik nur die Möglichkeite hierzu eine sogenannte Forth-Box einzufügen, in die der Code hineinprogrammiert werden musste. Dadurch ging jedoch die Grundintension des vorliegenden Erfindungskomplexes, das heißt die Erstellung eines Kommunikationsablaufs möglichst ohne Programmierkenntnisse, verloren. Dies kann daher keine zufriedenstellende Lösung sein. Alternativ musste die neue Funktionalität herstellerseitig implementiert werden, was mit Zeitverlust und Zusatzkosten verbunden war und daher ebenfalls unbefriedigend.

Die Aufgabe der vorliegenden Erfindung besteht deshalb darin, ein gattungsgemäßes Verfahren beziehungsweise einen gattungsgemäßen Protokolltester derart weiterzubilden, dass anwenderseitig neue Funktionalitäten generiert werden können - unter Vermeidung von Forth-Boxen - und deren Anwendung kein erneutes Kompilieren und Linken der beteiligten DLLs erfordert.

Diese Aufgabe wird gelöst durch ein Verfahren mit den Merkmalen von Patentanspruch 1 sowie durch einen Protokolltester mit den Merkmalen von Patentanspruch 17.

Durch diese Maßnahmen lassen sich neue Funktionalitäten kreieren, ohne dass die DLLs neu kompiliert werden müssten oder neue Binaries ausgeliefert werden müssten, wobei dennoch aus der graphischen Testbeschreibung ablauffähige Skripte generiert werden.

Der Erfindung liegt die Erkenntnis zugrunde; dass standardmäßig eine Datei vorgesehen werden kann, in die von einem Spezialisten einmalig neue Funktionalitäten angelegt werden können, die dann sämtlichen Benutzern zur Verfügung stehen. Beispielsweise kann eine derartige Funktion von einem Spezialisten beim Hersteller kreiert, per Email verschickt und unmittelbar danach beim Benutzer eingesetzt werden.

Auch wenn die vorliegende Erfindung am Beispiel von MSC als Beschreibungssprache beschrieben wird, ist für den Fachmann offensichtlich, dass die Erfindung auch auf andere Beschreibungssprachen anwendbar ist.

Der Vorteil gegenüber einer Forth-Box-Verwendung liegt weiterhin in der zentralen Stelle des Codes. Soll sich beispielsweise das Verhalten eines neu definierten Elements ändern, muss lediglich der hinterlegte Quellcode umgeschrieben werden und nicht jede betroffene Forth-Box in jedem Szenario. Derartige Änderungen, d.h. Änderungen, die sich in vielen Folgeänderungen niederschlagen, treten häufig auf bei der Entwicklung neuer Standards beziehungsweise neuer Protokolle. Genau das ist aber das Einsatzgebiet eines Protokolltesters, so daß dieses Merkmal als besonders vorteilhaft angesehen wird.

Im Gegensatz zum Forth-Box-Ansatz das Szenario bei einer Änderung deshalb nicht neu kompiliert werden, da sich die Änderung nicht auf das generierte Ablaufskript bezieht, sondern auf die Funktion, die sich hinter einem Funktionsaufruf verbirgt. Damit stellt die vorliegende Erfindung die Möglichkeit bereit, MSC um beliebige Elemente zu erweitern, ohne dass die DLLs neu kompiliert werden müssten.

Bevorzugt ist die vorliegende Erfindung sehr vorteilhaft einsetzbar im Zusammenspiel mit einer weiteren Erfindung der Anmelderin mit dem Titel "Verfahren zum Erstellen eines Ablaufs einer zwischen mindestens zwei Instanzen ablaufenden Kommunikation und Protokolltester" (Anwaltsakte 27074) mit dem selben Anmeldetag wie die vorliegende Anmeldung, deren Offenbarung durch diese Bezugnahme in den Offenbarungsgehalt der vorliegenden Erfindung mit aufgenommen wird.

Bevorzugt wird in die Konfigurationsdatei weiterhin eingetragen für jeden einzugebenden Parameter der Funktionalität sowie das Ergebnis der Funktionalität, deren Name und deren Typ. Dadurch wird eine Typprüfung durchgeführt und ermöglicht, dass zur Compilezeit der passende Code abhängig von den verwendeten Typen generiert wird, da das Holen und Setzen der Werte in Forth für jeden Parametertypen unterschiedlich realisiert ist.

Bevorzugt ist die Anzeigeform ein Anzeigename der Funktionalität und/oder ein graphisches Symbol, wobei dem graphischen Symbol eine Graphikdatei zugeordnet ist, in der das graphische Symbol der Funktionalität implementiert ist. Durch die zuletzt genannte Maßnahme steht für die neu kreierte Funktionalität ein graphisches Symbol zur Verfügung, das in der Anwendung, das heißt zur Erstellung eines Kommunikationsablaufs, ebenso unproblematisch verwendet werden kann, wie diejenigen für die bereits herstellerseitig ausgelieferten Funktionalitäten. Die neu kreierte Funktionalität unterscheidet sich daher für den Benutzer in keiner Weise von den herstellerseitig ausgelieferten Standardfunktionen. Die neu kreierte Funktionalität, die unter Verwendung des ihr zugewiesenen graphischen Symbols zur Verfügung steht, kann mathematischer oder nicht-mathematischer Natur sein. Sie kann beispielsweise eine Formel repräsentieren oder auch die Ausgabe des Werts einer Variablen im Monitorfenster bewirken.

Die Beschreibungsdatei und/oder der ablauffähige Code des Verfahrens ist bevorzugt in Forth, in Jscript oder VBScript formuliert.

Die Konfigurationsdatei ist bevorzugt durch eine Textdatei realisiert, insbesondere im INI-Format oder als XML-Format.

Bevorzugt sind mehrere, insbesondere alle, von einem Benutzer kreierten Funktionalitäten in einer Konfigurationsdatei eingetragen. Damit kann herstellerseitig standardmäßig vorgesehen werden, dass zur Designzeit eine bestimmte Datei mit einem bestimmten Namen eingelesen wird und damit die in dieser Datei abgelegten Funktionalitäten dem Benutzer zur Verfügung gestellt werden.

Die Konfigurationsdatei kann weiterhin eine Angabe darüber enthalten, wie viele Funktionalitäten in ihr niedergelegt sind. Dadurch erhält ein Benutzer, der diese Konfigurationsdatei um weitere Funktionalitäten ergänzen möchte, sehr schnell einen Überblick. Außerdem erhält dadurch das Programm Informationen, nach wieviel Funktionen es die Konfigurationsdatei durchsuchen kann. Wenn sich aus dem einleitenden Teil der ersten Funktion ergibt, dass dies nicht die gesuchte Funktion ist, kann das Programm abbrechen und zum Lesen einer weiteren Konfigurationsdatei übergehen. Dadurch lässt sich Rechenzeit sparen.

Bevorzugt wird zur Implementierung der vom Benutzer kreierten Funktionalität in den ausführbaren Quellcode ein Aufruf der vom Benutzer kreierten Funktionalität mit ihrem Aufrufnamen eingefügt. Vor dem Aufruf können die von der vom Benutzer kreierten Funktionalität benötigten Parameter übergeben und nach dem Aufruf das Ergebnis der Funktionalität übergeben werden.

Bevorzugt erfolgt das Einlesen der Beschreibungsdatei mit einem Include-Befehl.

Weiterhin ist bevorzugt, dass in einem Schritt a) die an der Kommunikation beteiligten Instanzen graphisch ausgewählt werden und/oder in Schritt b) die Protokollschicht graphisch ausgewählt wird und/oder in Schritt c) die abstrakten Kommunikationsschnittstellen der Protokollschicht graphisch ausgewählt werden und in dabei auswählbaren Parametern Beschreibungsdateien zugeordnet sind, die in Schritt e) zur Erstellung eines zwischen den Instanzen ausführbaren Kommunikationsablaufs verwendet werden. Die abstrakten Kommunikationsschnittstellen umfassen bevorzugt SAPs (Service Access Points). Die Kommunikationsdaten umfassen bevorzugt PDUs (Protocol Data Units) und/oder ASPs (Abstract Service Primitives).

Schritt d) des erfindungsgemäßen Verfahrens umfasst bevorzugt folgende Teilschritte: Graphisches Auswählen eines Datenformats und graphischer Aufbau einer Kommunikationsabfolge zwischen den beteiligten Instanzen. Auch wenn erfindungsgemäß neue Funktionalitäten durch die erwähnten Maßnahmen bereitgestellt werden, so kann trotzdem vorgesehen sein, dass in dem Schritt des graphischen Aufbaus der Kommunikationsabfolge Source-Code eingebbar ist.

Bevorzugt sind allen auswählbaren Parametern Beschreibungsdateien zugeordnet, die in Schritt e) zur Erstellung eines zwischen den Instanzen ausführbaren Kommunikationsablaufs verwendet werden.

Wie für den Fachmann offensichtlich, lassen sich die anhand des erfindungsgemäßen Verfahrens vorgestellten Vorteile auch mit einem in entsprechender Weise ausgestatteten erfindungsgemäßen Protokolltester realisieren.

Weitere vorteilhafte Ausführungsformen ergeben sich aus den Unteransprüchen.

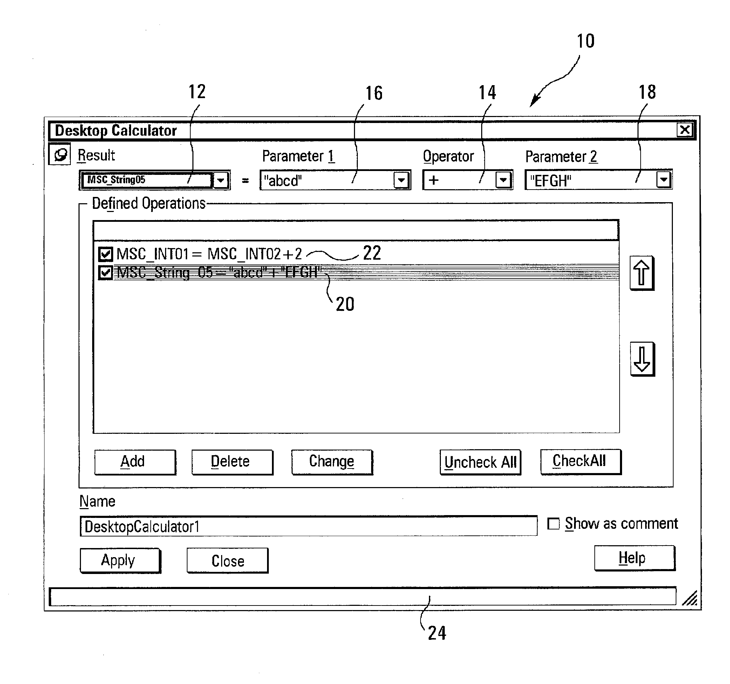

Im Nachfolgenden wird ein Ausführungsbeispiel der Erfindung mit Bezug auf die beigefügte Figur und den Anhang A1 näher beschrieben. Die Figur zeigt die Benutzeroberfläche auf einer Anzeigevorrichtung des erfindungsgemäßen Protokolltesters bei der Durchführung einer mit dem erfindungsgemäßen Verfahren kreierten Funktionalität. Im Anhang A1 sind Auszüge aus den zugehörigen Programmen zu entnehmen.

In der Figur ist eine Benutzeroberfläche 10 dargestellt, bei der einer im Fenster 12 dargestellten Variablen MSC_String05 der Wert zugewiesen wird, der sich aus der Verknüpfung, die im Fenster 14 dargestellt ist, eines im Fenster 16 dargestellten Parameters mit einem im Fenster 18 dargestellten Parameter ergibt, vorliegend die in Zeile 20 dargestellte Funktionalität

$$MSC\_String05 = \text{"abcd"} + \text{"EFGH"}$$

Die in der darüber liegenden Zeile 22 dargestellte Funktionalität lautet

$$MSC\_INT01 = MSC\_INT02 + 2$$

und ist ebenfalls, d.h. wie die in Zeile 20 dargestellte Funktionalität, nicht in der herstellerseitig ausgelieferten Version eines erfindungsgemäßen Protokolltesters enthalten und muss daher unter Verwendung des erfindungsgemäßen Verfahrens von einem Benutzer kreiert werden. Die zugehörigen Programmsequenzen sind im Anhang A1 dargestellt:

Die Zeilen 3 bis 35 auf Seite 1 betreffen die Konfigurationsdatei, die vorliegend die Bezeichnung "MSC-DC. config" trägt. Die Zeile 6 gibt die Anzahl der Funktionen an, die in der Konfigurationsdatei abgelegt sind. Die Zeilen 8 bis 20 betreffen eine erste Funktionalität "function_0", die Zeilen 22 bis 35 eine zweite Funktionalität "function_1".

Für den Fall, dass eine die erste Funktionalität kennzeichnende Graphik zu hinterlegen ist, so könnte folgende Zeile 21 eingefügt werden

$$graphic = c:\backslash temp\backslash bla.jpg.$$

In der Datei bla.jpg wäre dann die zugehörige Graphik im jpg-Format abzulegen.

Der Aufbau der beiden Funktionalitäten ist identisch. In Zeile 9 ist der Anzeigename "displayName" angegeben, der "+" lautet, und im Fenster 14 angezeigt wird. Die nächste Zeile enthält den Aufrufnamen in der vom Benutzer zu kreierenden Beschreibungsdatei, die weiter unten mit der Bezeichnung "DC.4th" näher beschrieben werden wird. Die Zeile 11 gibt den Namen und den Speicherort dieser Beschreibungsdatei an. Zeile 12 definiert, dass der Parameter 1 vom Typ MSC integer oder eine Konstante ist. Die Zeile 13 gibt den Ausdruck an, der im Fenster 16 angezeigt wird. Die Zeile 14 gibt an, welche Aufforderung an den Benutzer eingeblendet wird, beispielsweise im Bereich 24 der Benutzeroberfläche 10. Die Zeilen 15 bis 17 betreffen entsprechende Angaben für den Parameter 2, wobei der Ausdruck in Zeile 16 im Fenster 18 angezeigt wird. Die Zeilen 18 bis 20 geben den Typ des Ergebnisses, die Anzeige an und Zeile 20 einen Hinweis, der wiederum im Fenster 24 eingeblendet wird. Die Angaben auf Seite 1 des Anhangs A1, Zeilen 9, 13, 16 und 19 führen zu folgender Anzeige in der Statuszeile im Fenster 24: "sum = addend + addend".

Die in den Zeilen 22 bis 34 angegebene zweite Funktionalität hat den in Zeile 24 angegebenen Aufrufnamen "$MSC$_Concat" und entspricht vom Aufbau der oben näher beschriebenen ersten Funktionalität.

Seite 1, Zeile 37 bis Seite 2, Zeile 26 zeigen den Code, der in das ablauffähige Skript eingefügt wird. Durch den Befehl in Zeile 41 wird die weiter unten noch näher zu beschreibende Beschreibungsdatei "DC.4th" aufgenommen. Seite 2, Zeile 1 gibt die Bezeichnung des Charts an, nämlich "Sum". Die Zeile 7 gibt an, dass der erste Parameter "MSC_INT2" zu holen ist, die Zeile 8 gibt an, dass der zweite Parameter die Zahl "2" ist. Mit dem Aufruf von "$MSC$_Sum" wird verzweigt in den zugehörigen Teil der Beschreibungsdatei, siehe weiter unten, nämlich in den Code auf Seite 2, Zeile 38. Die Zeile 10 auf Seite 2 des Anhangs gibt an, dass das Ergebnis mit der Bezeichnung "MSC_INT1" zurückgespeichert wird. Entsprechendes gilt für die Funktionalität "$MSC$_Concat". In den Zeilen 12 und 13 werden der erste und der zweite Parameter eingelesen. Mit Zeile 14 wird die entsprechende Funktionalität der Beschreibungsdatei aufgerufen, siehe Seite 2, Zeile 31 des Anhangs, und mit dem Code in Zeile 15 auf Seite 2 des Anhangs wird das Ergebnis zurückgespeichert.

Die auf Seite 2, Zeilen 28 bis 40 angegebene Beschreibungsdatei "DC.4th" gibt die beiden in der Konfigurationsdatei aufgelisteten Funktionalitäten wieder.

Die Reihenfolge zum Kreieren einer neuen Funktionalität ist aus Benutzersicht demnach wie folgt: Zuerst wird die Konfigurationsdatei um die entsprechende Funktionalität erweitert, vgl. Zeilen 3 bis 35 auf Seite 1 des Anhangs A1. Dann wird eine Beschreibungsdatei kreiert, auf die in der Funktionsbeschreibung der Konfigurationsdatei verwiesen wird, vgl. Zeilen 28 bis 40 auf Seite 2 des Anhangs A1. Durch diese Maßnahmen, die um die Erzeugung einer Graphikdatei mit einem graphischen Symbol für die neue kreierte Funktionalität ergänzt werden kann, wird dann ausführbarer Code erzeugt, vgl. im Anhang A1 Seite 1, Zeile 37 bis Seite 2; Zeile 26.

Anhang A1:

```
MSC-DC.config:
-->snip
[General]
numberoffunctions=2


[function_0]
displayName=+
functioncall=$MSC$_Sum
4th=c:\temp\DC.4th
parameter1.types=MSC_int,constant_int
parameter1.display=addent
parameter1.hint=Please enter an integer value or select a numeric variable
parameter2.types=MSC_int,constant_int
parameter2.display=addent
parameter2.hint=Please enter an integer value or select a numeric variable
result.types=MSC_int
result.display=sum
result.hint=Please select a numeric variable


[function_1]
displayName=+
functioncall=$MSC$_Concat
4th=c:\temp\DC.4th
parameter1.types=MSC_String,constant_string
parameter1.display=addent
parameter1.hint=Please enter a string value or select a string variable
parameter2.types=MSC_String,constant_string
parameter2.display=addent
parameter2.hint=Please enter a string value or select a string variable
result.types=MSC_string
result.display=sum
result.hint=Please select a string variable
<--snap


DCDemo.4th
-->snip
(...)
( >>>>>>>>> Commands <<<<<<<<< )
include pc:boot:c:\temp\DC.4th
(...)
```

```
\ ----- document segment 'Sum' -----
2 STATE_INIT{
        " Desktop Calculator 'DesktopCalculator1' start " " Sum/TC_1: " 2
$MSC$_TraceDCalculator $MSC$_TraceMsgArray
        ( start Desktop Calculator 'DesktopCalculator1' )
            ( MSC_INT01 = MSC_INT02 + 2 )
            MSC_INT2 @
            2
            $MSC$_Sum
            MSC_INT1 !
            ( MSC_String05 = "abcd" + "EFGH" )
            " abcd"
            " EFGH"
            $MSC$_Concat
            MSC_String5 $MSC$_!String
        ( end Desktop Calculator 'DesktopCalculator1' )
        " Desktop Calculator 'DesktopCalculator1' end " " Sum/TC_1: " 2
$MSC$_TraceDCalculator $MSC$_TraceMsgArray
        $MSC$_DefaultFlagGet 0= IF
            0 $MSC$_GetNextState 0 $MSC$_NewState
        ELSE
            $MSC$_ReturnDefaultChart
        THEN
    }STATE_INIT
(...)
<--snap


DC.4th
-->snip
(...)
: $MSC$_ConCat ( from-counted-string to-counted-string -- tmpstr )
    LOCALS| tmpstr dst src |
    src tmpstr !String                    ( move first string to tmpstr )
    dst 1+ tmpstr src C@ + 1+ dst C@ CMOVE ( append second string )
    src C@ dst C@ + tmpstr C!
;
(...)
: $MSC$_Sum + ;                   ( value value -- value )
(...)
<--snap
```

**Patentansprüche**

1. Verfahren zum Erstellen eines Ablaufs einer zwischen mindestens zwei Instanzen ablaufenden Kommunikation, wobei eine Instanz ein Protokolltester ist, **gekennzeichnet durch** folgende, am Protokolltester ausführbare Schritte:

   a) Auswählen der an der Kommunikation beteiligten Instanzen;
   b) Auswählen einer Protokollschicht, auf deren Grundlage die Kommunikation zwischen den ausgewählten Instanzen ablaufen soll;
   c) Auswählen derjenigen abstrakten Kommunikationsschnittstellen der Protokollschicht, die an der Kommunikation beteiligt sind;
   d) Auswählen der Kommunikationsdaten;
   e) Erstellen eines zwischen den mindestens zwei Instanzen ausführbaren Kommunikationsablaufs **durch** den Protokolltester, auf der Grundlage der Auswahlen in den Schritten a) bis d),

   wobei zumindest die Auswahl von Schritt d) graphisch erfolgt und den dabei auswählbaren Parametern Beschreibungsdateien zugeordnet sind, die in Schritt e) zur Erstellung eines zwischen den Instanzen ausführbaren Kommunikationsablaufs verwendet werden, wobei in Schritt d) aus einer Menge von fest vorgegebenen Funktionalitäten ausgewählt werden kann, wobei jeder Funktionalität eine graphische Repräsentation und eine Beschreibungsdatei zugeordnet ist,
   **dadurch gekennzeichnet**
   **daß** ein Benutzer zur Erweiterung der Menge der auswählbaren Funktionalitäten folgende Schritte durchführt:

   f) Anlegen zumindest einer Konfigurationsdatei, die zum Zeitpunkt der Erstellung des Kommunikationsablaufs zwischen den mindestens zwei Instanzen eingelesen und interpretiert wird und aus der zur Compilezeit des Verfahrens ein zugehöriger Code erzeugbar ist;
   g) Eintragen zumindest folgender Angaben in die Konfigurationsdatei:

   -   Aufrufname der Funktionalität im ablauffähigen Code des Verfahrens;
   -   mit der Funktionalität korrelierte Anzeigeform auf einer Anzeige, auf der sie dann vom Benutzer ausgewählt werden kann;
   -   Angaben zur Beschreibungsdatei, die den ablauffähigen Quellcode der Funktionalität enthält.

2. Verfahren nach Anspruch 1,
   **dadurch gekennzeichnet,**
   **daß** in die Konfigurationsdatei weiterhin eingetragen wird:

   -   für jeden einzugebenen Parameter der Funktionalität sowie das Ergebnis der Funktionalität: Name und Typ.

3. Verfahren nach Anspruch 1 oder 2,
   **dadurch gekennzeichnet,**
   **daß** die Anzeigeform ein Anzeigename der Funktionalität ist und/oder ein graphisches Symbol, wobei dem graphischen Symbol eine Graphikdatei zugeordnet ist, in der das graphische Symbol der Funktionalität implementiert ist.

4. Verfahren nach einem der vorhergehenden Ansprüche,
   **dadurch gekennzeichnet,**
   **daß** die Beschreibungsdatei und/oder der ablauffähige Code des Verfahrens in Forth, in Jscript oder in VBScript formuliert wird/werden.

5. Verfahren nach einem der vorhergehenden Ansprüche,
   **dadurch gekennzeichnet,**
   **daß** die Konfigurationsdatei durch eine Textdatei realisiert wird, insbesondere im INI-Format oder als XML-Format.

6. Verfahren nach einem der vorhergehenden Ansprüche,
   **dadurch gekennzeichnet,**
   **daß** mehrere, insbesondere alle von einem Benutzer kreierten Funktionalitäten in einer Konfigurationsdatei eingetragen sind.

**7.** Verfahren nach Anspruch 6,
**dadurch gekennzeichnet,**
**daß** die Konfigurationsdatei weiterhin eine Angabe darüber enthält, wieviele Funktionalitäten in ihr niedergelegt sind.

**8.** Verfahren nach einem der vorhergehenden Ansprüche,
**dadurch gekennzeichnet,**
**daß** zur Implementierung der vom Benutzer kreierten Funktionalität in den ausführbaren Quellcode ein Aufruf der vom Benutzer kreierten Funktionalität mit ihrem Aufrufnamen eingefügt wird.

**9.** Verfahren nach Anspruch 8,
**dadurch gekennzeichnet,**
**daß** vor dem Aufruf die von der vom Benutzer kreierten Funktionalität benötigten Parameter übergeben und nach dem Aufruf das Ergebnis der Funktionalität übergeben wird.

**10.** Verfahren nach einem der vorhergehenden Ansprüche,
**dadurch gekennzeichnet,**
**daß** das Einlesen der Beschreibungsdatei mit einem Include-Befehl erfolgt.

**11.** Verfahren nach einem der vorhergehenden Ansprüche,
**dadurch gekennzeichnet,**
**daß** weiterhin in Schritt a) die an der Kommunikation beteiligten Instanzen graphisch ausgewählt werden und/oder in Schritt b) die Protokollschicht graphisch ausgewählt wird und/oder in Schritt c) die abstrakten Kommunikationsschnittstellen der Protokollschicht graphisch ausgewählt werden und den dabei auswählbaren Parametern Beschreibungsdateien zugeordnet sind, die in Schritt e) zur Erstellung eines zwischen den Instanzen ausführbaren Kommunikationsablaufs verwendet werden.

**12.** Verfahren nach einem der vorhergehenden Ansprüche,
**dadurch gekennzeichnet,**
**daß** die abstrakten Kommunikationsschnittstellen SAPs (Service Access Points) umfassen.

**13.** Verfahren nach einem der vorhergehenden Ansprüche,
**dadurch gekennzeichnet,**
**daß** die Kommunikationsdaten PDUs (Protocol Data Units) und/oder ASPs (Abstract Service Primitives) umfassen.

**14.** Verfahren nach einem der vorhergehenden Ansprüche,
**dadurch gekennzeichnet,**
**daß** Schritt d) folgende Teilschritte umfaßt:

    d1) graphisches Auswählen eines Datenformats;
    d2) graphischer Aufbau einer Kommunikationsabfolge zwischen den beteiligten Instanzen.

**15.** Verfahren nach Anspruch 14,
**dadurch gekennzeichnet,**
**daß** in Schritt d2) Source-Code eingebbar ist.

**16.** Verfahren nach einem der vorhergehenden Ansprüche,
**dadurch gekennzeichnet,**
**daß** allen auswählbaren Parametern Beschreibungsdateien zugeordnet sind, die in Schritt e) zur Erstellung eines zwischen den Instanzen ausführbaren Kommunikationsablaufs verwendet werden.

**17.** Protokolltester mit

    a) Mitteln zum Auswählen der an einer Kommunikation beteiligten Instanzen (19, 20, 24, 26), wobei eine der Instanzen der Protokolltester ist;
    b) Mitteln zum Auswählen einer Protokollschicht (20, 28a), auf deren Grundlage die Kommunikation zwischen den ausgewählten Instanzen ablaufen soll;
    c) Mitteln zum Auswählen derjenigen abstrakten Kommunikationsschnittstellen (20, 32a) der Protokollschicht, die an der Kommunikation beteiligt sind;

d) Mitteln zum Auswählen der Kommunikationsdaten (20, 34);

e) Mitteln zum automatischen Erstellen eines zwischen den Instanzen ausführbaren Kommunikationsablaufs durch den Protokolltester, auf der Grundlage der Auswahlen gemäß a) bis d),

wobei zumindest die Auswahlmittel gemäß Schritt d) graphische Auswahlmittel sind und den durch sie auswählbaren Parametern Beschreibungsdateien zugeordnet sind, die gemäß Schritt e) von den Erstellungsmitteln zur Erstellung eines zwischen den Instanzen ausführbaren Kommunikationsablaufs verwendbar sind, wobei in Schritt d) aus einer Menge von fest vorgegebenen Funktionalitäten ausgewählt werden kann, wobei jeder Funktionalität eine graphische Repräsentation und eine Beschreibungsdatei zugeordnet ist,

**dadurch gekennzeichnet**

**daß** er weiterhin umfaßt:

f) Mittel zum Anlegen zumindest einer Konfigurationsdatei, die zum Zeitpunkt der Erstellung des Kommunikationsablaufs zwischen den mindestens zwei Instanzen einlesbar und interpretierbar ist und aus der zur Compilezeit des Verfahrens ein zugehöriger Code erzeugbar ist;

g) Mittel zum Eintragen zumindest folgender Angaben in die Konfigurationsdatei:

- Aufrufname der Funktionalität im ablauffähigen Code des Verfahrens;
- mit der Funktionalität korrelierte Anzeigeform auf einer Anzeige, auf der sie dann vom Benutzer ausgewählt werden kann;
- Angaben zur Beschreibungsdatei, die den ablauffähigen Quellcode der Funktionalität enthält.

EP 1 420 546 A1

10

12    16    14    18

**Desktop Calculator**    ☒

Result                    Parameter 1         Operator      Parameter 2

[MSC_String05] ▼  =  ["abcd" ▼]  [+ ▼]  ["EFGH" ▼]

┌ Defined Operations ─────────────────────────────────────────┐

☑ MSC_INT01 = MSC_INT02 + 2  ⌒⌒ 22

☑ MSC_String 05 = "abcd" + "EFGH"

20

⇧

⇩

[Add]    [Delete]    [Change]        [Uncheck All]    [CheckAll]

Name

[DesktopCalculator1]                    ☐ Show as comment

[Apply]    [Close]                    [Help]

24

# EP 1 420 546 A1

**Europäisches Patentamt**

## EUROPÄISCHER RECHERCHENBERICHT

Nummer der Anmeldung

EP 02 02 5497

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X,D | EP 1 128 600 A (TEKTRONIX INC) 29. August 2001 (2001-08-29) *Seite 4, [0023]-[0025]* * Ansprüche 1-8 * --- | 1-16 | H04L12/26 |
| A | US 6 421 822 B1 (PAVELA THOMAS J) 16. Juli 2002 (2002-07-16) * Spalte 2, Zeile 6 - Zeile 36 * ----- | 1,16 | |

**RECHERCHIERTE SACHGEBIETE (Int.Cl.7)**

H04L
G06F

Der vorliegende Recherchenbericht wurde für alle Patentansprüche erstellt

| Recherchenort | Abschlußdatum der Recherche | Prüfer |
|---|---|---|
| DEN HAAG | 6. Mai 2003 | Gerling, J.C.J. |

**ANHANG ZUM EUROPÄISCHEN RECHERCHENBERICHT
ÜBER DIE EUROPÄISCHE PATENTANMELDUNG NR.**   EP 02 02 5497

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-05-2003

| Im Recherchenbericht angeführtes Patentdokument | | Datum der Veröffentlichung | Mitglied(er) der Patentfamilie | | Datum der Veröffentlichung |
|---|---|---|---|---|---|
| EP 1128600 | A | 29-08-2001 | EP | 1128600 A1 | 29-08-2001 |
| | | | JP | 2001285402 A | 12-10-2001 |
| | | | US | 2001015732 A1 | 23-08-2001 |
| US 6421822 | B1 | 16-07-2002 | DE | 19960050 A1 | 29-06-2000 |

EPO FORM P0461

Für nähere Einzelheiten zu diesem Anhang : siehe Amtsblatt des Europäischen Patentamts, Nr.12/82